# EUROPEAN PATENT SPECIFICATION

(11) **EP 2 779 820 B1**
(45) Date of publication and mention of the grant of the patent: **04.10.2017**
(21) Application number: 11875617.0
(22) Date of filing: 16.11.2011
(51) Int. Cl.: A01G 3/08, A01D 34/90, A01D 75/20, A01G 3/053

(54) **CORD ATTACHMENT ASSEMBLY OF A POWER TOOL HAVING A LOAD RELIEVING SYSTEM**
SCHNURBEFESTIGUNGSANORDNUNG FÜR EIN ELEKTROWERKZEUG MIT EINEM ENTLASTUNGSSYSTEM
ENSEMBLE DE FIXATION DE CORDON D'UN OUTIL ÉLECTRIQUE AYANT UN SYSTÈME DE DÉTENTE DE CHARGE

(43) Date of publication of application: 24.09.2014
(73) Proprietor: Husqvarna AB, 56182 Huskvarna (SE)
(72) Inventor: HALLENDORFF, Johan, S-553 36 Jönköping (SE); THIL, Ola, S-561 42 Huskvarna (SE)
(86) International application number: PCT/SE2011/051379
(87) International publication number: WO 2013/074005

(56) References cited:
- WO-A1-2010/140939
- WO-A1-2010/140939
- DE-A1- 3 216 912
- DE-A1- 3 216 912
- DE-B1- 2 301 950
- DE-B1- 2 301 950
- DE-U1- 29 908 263
- FR-A1- 2 201 027
- SE-C- 205 916
- US-A- 4 483 070
- US-A- 4 483 070
- US-A- 4 644 654
- US-A- 5 564 131
- US-A1- 2002 183 670

## Description

### TECHNICAL FIELD

The present disclosure relates to power tools having a guide rod and a bodily harnessed load relieving system comprising a cord, and in particular to a cord attachment assembly of such a power tool.

### BACKGROUND OF THE INVENTION

Power tools having a guide rod and a bodily harnessed load relieving system, are well known. A purpose of such a load relieving system is to aid the suspension and support of hand held power tools and to eliminate or reduce the hand held weight of those power tools by transferring all or nearly all weight which would otherwise be supported by the operators hands and arms to a body harness which is primarily supported and fastened at the operators waist along with secondary support and fastening to the upper torso.

WO2010140939A1 discloses a power tool having a load relieving system.

A load relieving system may comprise a harness, to which a power unit of the power tool is connected, a support frame, and a flexible line or cord. The support frame may comprise a lower bar, connected to the harness, and an upper bar extending in a forward direction from an uppermost portion of the lower bar. The cord interconnects a guide rod of the power tool with the upper bar, so as to move some of the weight of the power tool to the operators back, via the support frame and the body harness.

There is a need for an arrangement providing an easy and safe way to unfasten the load relieving system when required. This might e.g. be needed if the cord of the load relieving system gets caught by boughs and twigs present within the working area of the tool, or if a branch or stem falls over the cord.

### SUMMARY OF THE INVENTION

It is an object of the present invention to provide an arrangement providing an easy and safe way to unfasten/disengage a load relieving system of a power tool having such load relieving system.

According to an aspect of the solution the object is at least partially achieved by means of a portable power tool according to claim 1. Thereby an automatic safety release mechanism is achieved allowing the cord to release from the support frame.

According to an embodiment, the cord attachment assembly has an auxiliary cord passage portion, to which an operator of the power tool may move the clamped portion of the cord, by means of pulling a free end of the cord so as to manually release the cord from the cord attachment assembly.

Thereby, an operator may easily release the cord from the support frame when necessary. This may e.g. be the case if the operator gets stuck somewhere and needs to release the cord although the force acting on the cord is below the threshold value. This opportunity provides a power tool which is even safer and even more easy to use.

According to another embodiment, the cord clamping portion comprises ribs.

Thereby, an easy way of providing a one-way locking mechanism is achieved.

According to another embodiment, the ribs extend at an angle of 25-80 degrees relative to the first direction, and the cord passage portion is positioned adjacent to the ribs.

Thereby, the force acting on the clamped cord portion will cause the clamped cord portion to move along the ribs towards the cord passage portion, if the force is strong enough. If the force exceeds the threshold value, the clamped cord portion will pass to the cord passage portion, since it is positioned adjacent to the ribs. Thereby a simple, safe and cost-efficient cord attachment assembly is achieved.

According to yet another embodiment the ribs extend at an angle of about 60 degrees relative to the first direction.

According to another embodiment, the cord attachment assembly is provided in a front member of an upper bar of the support frame.

According to another embodiment, the cord attachment assembly is part of a cord length adjustment arrangement.
Thereby, several functions may be provided using a minimum of parts. Accordingly a cost-efficient power tool which is easy to manufacture is achieved.

According to another embodiment, the cord attachment assembly and a locking device of the cord length adjustment arrangement are integrally formed. Thereby, several functions may be provided using a minimum of parts. Accordingly a cost-efficient power tool which is easy to manufacture is achieved.

According to another embodiment the portable power tool is a back pack clearing tool.

### BRIEF DESCRIPTION OF THE DRAWINGS

The invention will be understood and appreciated more fully from the following detailed description, taken in conjunction with the drawings, in which:
Fig. **1** is a perspective view of a power tool according to the present invention held by an operator,
Fig. **2** is a perspective view of an upper bar of a load relieving system,
Fig. **3** is a side view of the upper bar of Fig. **2****,**
Fig. **4** is a cross sectional view of the upper bar of Fig. **3****,**
Fig. **5** is a side view of an upper bar front member,
Fig. **6** is a cross sectional view of the upper bar front member of Fig. **5****,** taken along line **E-E** in Fig. **5****,**
Fig. **7** is a partially broken away side view of the upper bar front member of Fig. **5****,**
Fig. **8** is a cross sectional view of the upper bar front member of Figs. **6** and **7****.**
Fig. **9** is a side view of a first part of the upper bar front member of Figs. **5** and **6****,**
Fig. **10** is a perspective view of the first part shown in Fig. **9****.**

### DESCRIPTION OF PREFERRED EMBODIMENTS

The present invention will be described more fully hereinafter with reference to the accompanying drawings, in which preferred embodiments of the invention are shown. The invention may, however, be embodied in many different forms and should not be construed as limited to the embodiments set forth herein, rather these embodiments are provided so that this disclosure will be thorough and complete, and will fully convey the scope of the invention to those skilled in the art. In the drawings, like numbers refer to like elements.

### The power tool in general

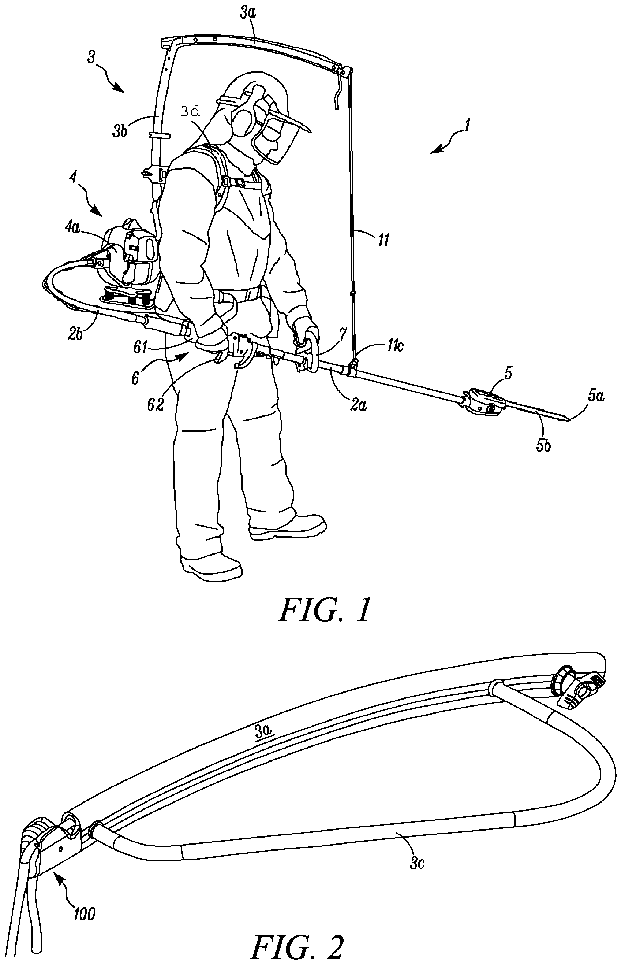

Referring to Fig. **1****,** a portable power tool **1** according to an embodiment of the present invention is shown. The portable tool **1** in Fig. **1** is embodied as a back pack chain saw **1.**

The back pack chain saw shown in Fig. **1** comprises body **4** with a power unit **4a,** such as a combustion engine **4a.** Of course, it would also be possible to use a battery pack as a power unit, as well as any other for the purpose suitable power unit **4a.**

The power unit **4a** is arranged to drive a working tool **5a,** which e.g. may be a chain **5a** arranged to rotate about a guide bar **5b.**

An elongate shaft assembly **2a, 2b** is arranged between the body **4** and a working tool assembly **5.** The working tool assembly **5** comprises the working tool **5a.** The shaft assembly **2a, 2b** comprises a flexible shaft **2b,** interconnecting the body **4** and a main handle assembly **6.** The main handle assembly **6** is provided with a main handle **61** and a throttle trigger **62.** The shaft assembly furthermore comprises an elongate guide rod **2a** interconnecting the main handle assembly **6** and the working tool assembly **5.**

An auxiliary handle **7** may be connected to the guide rod **2a** in a position in front of the main handle assembly **6.**

### Load relieving system

The back pack chain saw **1** shown in Fig. **1** furthermore has a load relieving system **3** comprising a harness **3d,** a support frame **3a, 3b** attached to the harness **3d,** and a cord **11.**

The support frame **3a, 3b** comprises an essentially vertically extending lower bar **3b** and an essentially horizontally extending upper bar **3a.** The lower bar **3b** is attached to the harness **3d** and to the upper bar **3a.** The upper bar **3a** may extend forwardly from the lower bar **3b,** as shown in Fig. **1****.**

As shown in Fig. **2****,** a stem guard **3c** may be connected to the upper bar **3a.** The stem guard is arranged to prevent branches from falling down into the head/face of the operator.

### Cord

A cord **11** is arranged to interconnect the upper bar **3a** and the guide rod **2a,** so as to move the weight of the working tool assembly **5** and of the guide rod **2a** to the load relieving system **3.**

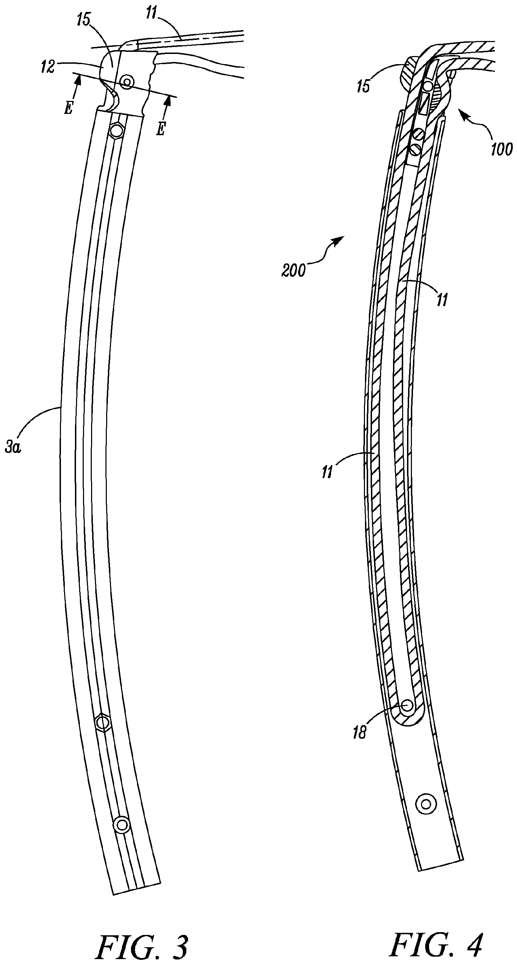

The guide rod **2a** may comprise a cord connection in the form of a snap-in connection. The cord may be secured from slipping by a knot **11c** in a lower end of the cord **11.** The cord is preferably elastic. As shown in Fig. **4****,** the cord may be partly hidden inside the upper bar **3a.**

### Cord attachment assembly

The cord **11** is fixed to the upper bar **3a** by means of a cord attachment assembly **100.** The cord attachment assembly has a cord clamping portion **13** in which a portion **11a** of the cord **11** is clamped during normal use of the power tool.

Under certain circumstances (which will be described more fully below) the clamped cord portion **11a** will move automatically to a cord passage portion **14,** through which the cord may run. In this way, the cord may be automatically released from the cord attachment assembly and thereby from the upper bar.

According to the embodiment shown in the drawings, the cord attachment assembly is part of a cord length adjustment arrangement **200.**

### Cord length adjustment arrangement

The cord length adjustment arrangement **200** comprises the cord attachment assembly **100,** a turning point **18,** and a locking device **15,** which is preferably a one-way locking device. The cord **11** is fixed to the upper bar **3a** by means of the cord attachment assembly **100.** The cord **11** is further arranged around the turning point **18,** which turning point **18** is arranged inside the upper bar **3a.** The cord **11** is also clamped by the one-way locking device **15.**

The cord length adjustment arrangement allows the operator to adjust the cord length slightly while carrying the power tool in a working position.

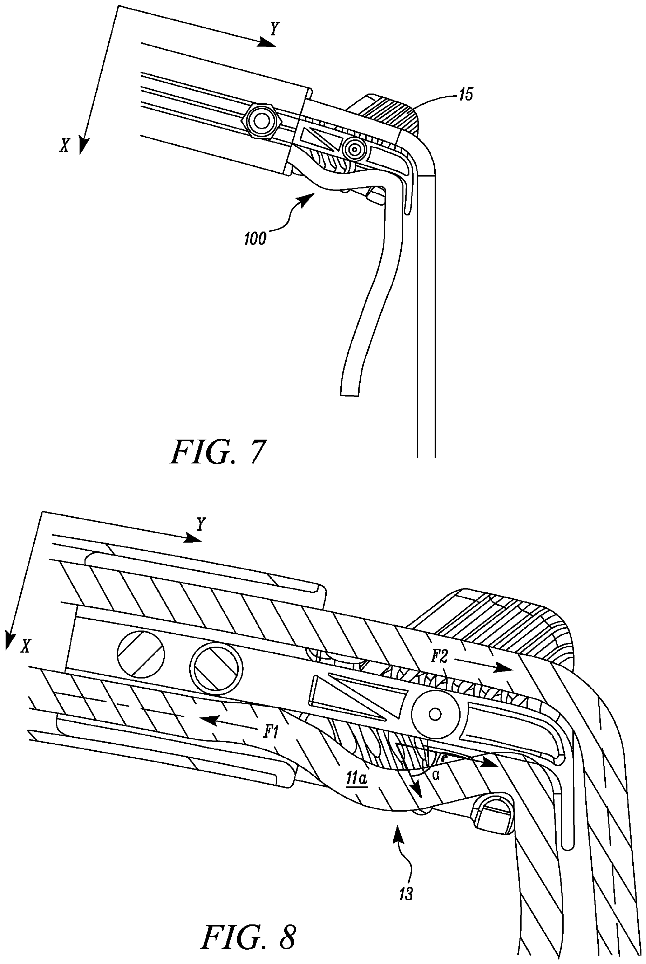

During use of the backpack chain saw **1** according to the Figs. **1-10****,** the cord arriving from the guide rod **2a** will enter the upper bar **3a** adjacent to the one way locking device **15.** A force **F2** will act on the part of the cord positioned in the locking device, due to the weight of the working tool and the guide rod **2a.** As shown in Fig. **8****,** the force **F2** will be forwardly directed.

The one-way locking device **15** only prevents the portion of the cord **11** positioned in the one-way locking device from moving backwards, whereas it is the cord attachment assembly **100** that inhibits it from moving forwards.

The cord is preferably elastic, since that makes the cord length adjustment arrangement **200** work properly. The functioning of a cord length adjustment arrangement according to the one described above is previously known and is therefore not described in detail herein.

### An exemplary embodiment of a cord attachment assembly

The cord attachment assembly **100** may be formed in an upper bar front member **12** which is arranged to be attached to a front end of the upper bar **3a.**

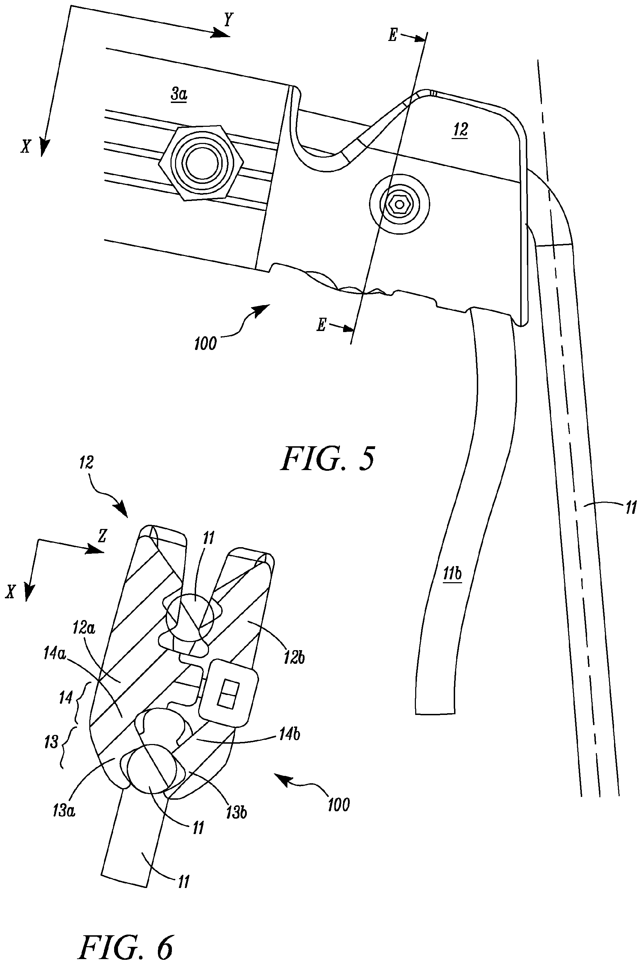

Referring to Figs. **6** and **8****,** the cord attachment assembly has a longitudinal direction **Y,** a vertical direction **X** and a transversal direction **Z.**

The cord attachment assembly has a forward direction and a rearward direction as seen from an operator's point of view. As seen in Fig. **8****,** the force **F2** acts on the cord in a forward direction. The forward and rearward direction corresponds to the longitudinal direction **Y** of the cord attachment assembly.

The cord attachment assembly also has upwards and downwards directions, as seen from an operator's point of view, when the operator carries the power tool **1** as shown in Fig. **1****.**

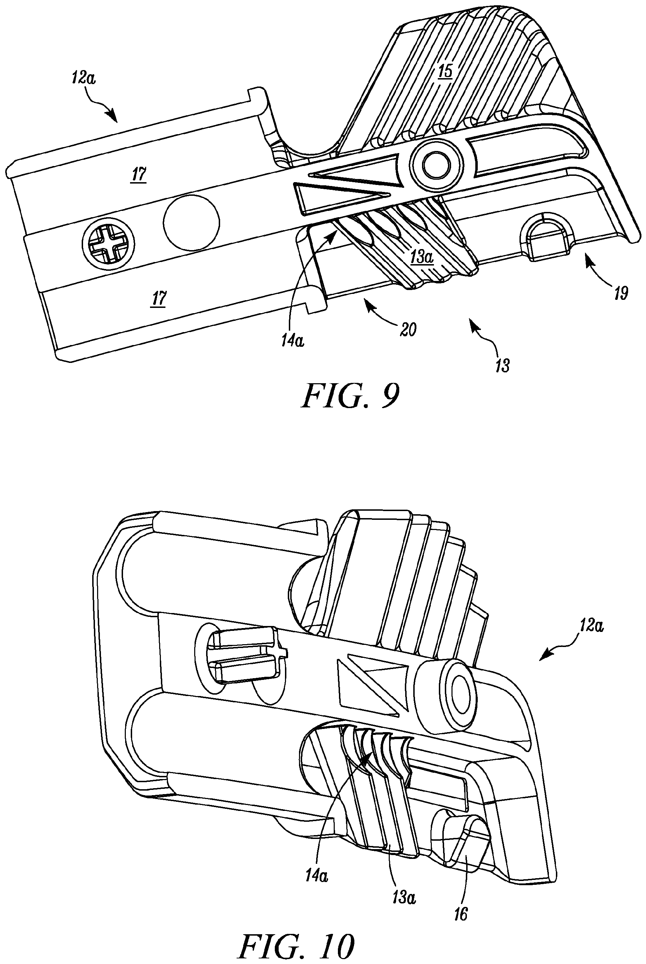

A cross section of an upper bar front member **12** is shown in Fig. **6****.** The upper bar front member **12** may comprise a first part **12a** and a second part **12b.** The first part and the second part are arranged to be assembled as shown in Fig. **6****.** The first part **12a** of an upper bar front member **12** is shown in Figs 9 and **10****.**

The cord clamping portion **13** is defined by a ribbed portion **13a** of the first part **12a** of the upper bar front member **12** and a corresponding ribbed portion **13b** of the second part **12b** of the upper bar front member.

During normal use of the chain saw, a portion **11a** of the cord **11** is clamped between the ribbed portions **13a, 13b.** During use of the backpack chain saw, a force **F1** will act on the clamped portion **11a** of the cord **11** due to the weight the power tool. The force **F1** is directed backwards, as shown in Fig. **8****.**

The magnitude of the force **F1** will be lower than the magnitude of the force **F2** due to friction losses within the channel **17** that the cord passes within the upper bar **3a** and within the rear end of the upper bar front member **12.**

As long as the force **F1** does not exceed a predetermined threshold value, the clamped portion of the cord will stay clamped between the ribbed portions **13a,** 13b. An exemplary predetermined threshold value may be about 30-50 N.

The ribs are preferably configured such that they extend at an angle a relative to the direction of the force **F1.** As shown in Fig. **8****,** the extension direction of the force **F1** corresponds to the longitudinal direction of the cord attachment assembly, i.e. the **Y** direction as shown in Fig. **8****.** The angle ***α*** is therefore defined as an angle between the longitudinal direction **Y** and an extension direction of the ribs, as seen in the **XY**-plane, as shown in Fig. **8****.**

An essentially strong force **F1** will cause the clamped cord portion **11a** to move upwardly and rearwardly, thanks to angled configuration of the ribs.

If the force exceeds the threshold value the clamped cord portion **11a** will be forced upwardly and rearwardly until it reaches the passage portion **14.** This may be the case e.g. if a stem or branch falls onto the portion of the cord which extends between the upper bar and the guide rod.

As soon as the clamped portion **11a** of the cord **11** has reached the passage portion **14,** a force **F1** below the threshold value is sufficient to release the cord form the upper bar **3a** and thereby from the support frame **3a, 3b.**

The angle ***α*** is preferably chosen such that the clamped portion **11a** of the cord **11** will not move to the cord passage portion **14** if the clamped portion is exerted to a force corresponding to normal working conditions. If the angle ***α*** is too small, the clamped portion of the cord will slide towards the cord passage portion too easily. On the contrary, if the angle ***α*** is to large, an extremely large force is needed to move the clamped portion of the cord to the cord passage portion.

According to an exemplary embodiment, the angle ***α*** is about **60** degrees.

Once the cord has reached the passage portion, it is released from the cord attachment assembly **100** and may detach from the upper bar **3a.**

The passage portion may be defined by a recessed portion **14a** of the first part **12a** of the upper bar front member **12** and a corresponding recessed portion **14b** of the second part **12b** of the upper bar front member. The diameter of the passage portion is large enough to allow passage of the cord.

An operator may also manually release the cord from the upper bar by means of pulling the free end **11b** of the cord such that clamped portion **11a** of the cord is forced downwards until it is released from the clamping portion. In that case the cord will bypass the cord clamping portion and will run into the upper bar through the passage **20** arranged behind the clamping portion.

A heel portion **16** as shown in Fig. **10** ensures that this manual release mechanism is not activated by mistake, since a certain force is needed to move the cord over the heel portion **16.** Corresponding to the clamping portion, the heel portion may comprise a first heel **16a** provided in the first part **12a** of the upper bar front member, and a second heel **16b** provided in the second part **12b** of the upper bar front member.

Furthermore, the heel portion **16** assists in mounting the cord correctly in the cord attachment assembly **100.** A free end portion of the cord will extend from the channel **17** in a lower portion of the upper bar front member **12.** An operator wanting to attach the cord to the cord attachment assembly may then push a portion of this free end portion over the heel portion **16** such that a cord configuration resembling the one shown in Fig. **8** will result. A curved portion of the cord may extend below the cord clamping portion **13.** When the operator pulls the free end of the cord, which end extends from a passage **19** defined in front of the heel portion **16,** the curved portion will be forced into the cord clamping portion **13,** and thereby the cord is attached to the cord attachment assembly.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A portable power tool (1) comprising
a working tool assembly (5) with a working tool (5a);
a body (4) with a power unit (4a), which power unit (4a) is arranged to drive the working tool (5a);
an elongate guide rod (2a) arranged between the working tool assembly (5) and the body (4);
a load relieving system (3) comprising a harness (3d) arranged to be worn by an operator of the power tool (1), a support frame (3a, 3b) arranged to be connected to the harness (3d), and a cord (11); wherein the body (4) is arranged to be connected to the harness (3d); wherein the cord (11) is arranged to interconnect the guide rod (2a) and the support frame (3a, 3b), the cord being arranged to be connected to the support frame (3a, 3b) by means of a cord attachment assembly (100), **characterized in that** the cord (11) has a clamped cord portion (11a) and a free end (11b) portion; and the cord attachment assembly (100) has a cord clamping portion (13) arranged to clamp the portion (11a) of the cord so as to fix the cord (11) to the support frame (3 a, 3b) during normal use of the power tool (1), and a cord passage portion (14) through which the cord (11) may pass so as to release the cord (11) from the support frame (3a, 3b), and **in that**
the cord attachment assembly (100) is configured so as to actuate automatic movement of the clamped portion (11a) of the cord (11) from the cord clamping portion (13) to the cord passage portion (14) when a force (F1) acting on the clamped portion (11a) of the cord (11) in a first direction (Y) exceeds a predetermined threshold value.

2. The portable power tool (1) according to claim 1, wherein the cord attachment assembly (100) has an auxiliary cord passage portion (20), to which an operator of the power tool (1) may move the clamped portion (11a) of the cord (11), by pulling the free end (11b) of the cord (11) so as to manually release the cord (11) from the cord attachment assembly (100).

3. The portable power tool (1) according to any of the preceding claims, wherein the cord clamping portion (13) comprises ribs.

4. The portable power tool (1) according to claim 3, wherein the ribs extend at an angle (a) of 25-80 degrees relative to the first direction (Y), and wherein the cord passage portion (14) is positioned adjacent to the ribs.

5. The portable power tool (1) according to any of claims 3-4, wherein the ribs extend at an angle (a) of about 60 degrees relative to the first direction (Y).

6. The portable power tool (1) according to any of the preceding claims, wherein the cord attachment assembly (100) is provided in a front member (12) of an upper bar (3a) of the support frame (3a, 3b).

7. The portable power tool (1) according to any of the preceding claims, wherein the cord attachment assembly (100) is part of a cord length adjustment arrangement (200).

8. The portable power tool (1) according to claim 7, wherein the cord attachment assembly (100) and a locking device (15) of the cord length adjustment arrangement (200) are integrally formed.

9. The portable power tool (1) according to any of the preceding claims, which portable power tool (1) is a back pack clearing tool.

10. The portable power tool (1) according to any of preceding claims, wherein the tool (1) is a back pack chain saw.

11. The portable power tool (1) according to any of preceding claims, wherein the cord is elastic.

12. The portable power tool (1) according to any of preceding claims, wherein the predetermined threshold value of the force (F1) acting on the clamped portion (11a) of the cord (11) in a first direction is about 30-50 N.

## Patentansprüche

1. Tragbares Handwerkzeug (1), umfassend
eine Arbeitswerkzeug-Anordnung (5) mit einem Arbeitswerkzeug (5a);
einen Körper (4) mit einer Antriebseinheit (4), wobei die Antriebseinheit (4a) angeordnet ist, um das Arbeitswerkzeug (5a) anzutreiben;
eine längliche Führungsstange (2), die zwischen der Arbeitswerkzeug-Anordnung (5) und dem Körper (4) angeordnet ist;
ein Entlastungssystem (3) umfassend ein Tragegeschirr (3d), das angeordnet ist, um von einer Bedienperson des Handwerkzeugs (1) getragen zu werden, einen Stützrahmen (3a, 3b), der angeordnet ist, um mit dem Tragegeschirr (3d) verbunden zu werden, und
ein Seil (11); wobei der Körper (4) angeordnet ist, um mit dem Tragegeschirr (3d) verbunden zu werden; wobei das Seil (11) angeordnet ist, um die Führungsstange (2a) und den Stützrahmen (3a, 3b) zu verbinden, wobei das Seil angeordnet ist, um mit dem Stützrahmen (3a, 3b) mittels einer Seilbefestigungsanordnung (100) verbunden zu werden,
**dadurch gekennzeichnet, dass** das Seil (11) einen festgeklemmten Seilabschnitt (11a) und einen freien Endabschnitt (11b) aufweist; und die Seilbefestigungsanordnung (100) einen Seilklemmabschnitt (13) aufweist, der angeordnet ist, um den Abschnitt (11a) des Seils festzuklemmen, um das Seil (11) an dem Stützrahmen (3a, 3b) während des normalen Betriebs des Handwerkzeugs (1) zu fixieren, und einen Seildurchführungsabschnitt (14), durch welchen das (11) passieren kann, um das Seil (11) von dem Stützrahmen (3a, 3b) zu lösen, und dass
die Seilbefestigungsanordnung (100) dazu ausgestaltet ist, die automatische Bewegung des festgeklemmten Abschnitts (11a) des Seils (11) von dem Seilfestklemmabschnitt (13) zu dem Seildurchführungsabschnitt (14) zu betätigen, wenn eine Kraft (F1), die auf den festgeklemmten Abschnitt (11a) des Seils (11) in einer ersten Richtung (Y) wirkt, einen vorbestimmten Schwellenwert überschreitet.

2. Tragbares Handwerkzeug (1) nach Anspruch 1, wobei die Seilbefestigungsanordnung (100) einen zusätzlichen Seildurchführungsabschnitt (20) aufweist, zu dem eine Bedienperson des Handwerkzeugs (1) den festgeklemmten Abschnitt (11a) des Seils (11) bewegen kann, indem sie das freie Ende (11b) des Seils (11) so zieht, dass das Seil (11) händisch aus der Seilbefestigungsanordnung (100) gelöst wird.

3. Tragbares Handwerkzeug (1) nach einem der vorhergehenden Ansprüche, wobei der Seilklemmabschnitt (13) Rippen umfasst.

4. Tragbares Handwerkzeug (1) nach Anspruch 3, wobei die Rippen sich in einem Winkel (a) von 25-80 Grad relativ zu der ersten Richtung (Y) erstrecken, und wobei der Seildurchführungsabschnitt (14) benachbart zu den Rippen positioniert ist.

5. Tragbares Handwerkzeug (1) nach einem der Ansprüche 3-4, wobei die Rippen sich in einem Winkel (a) von etwa 60 Grad relativ zu der ersten Richtung (Y) erstrecken.

6. Tragbares Handwerkzeug (1) nach einem der vorhergehenden Ansprüche, wobei die Seilbefestigungsanordnung (100) in einem vorderen Element (12) einer oberen Stange (3a) des Stützrahmens (3a, 3b) vorgesehen ist.

7. Tragbares Handwerkzeug (1) nach einem der vorhergehenden Ansprüche, wobei die Seilbefestigungsanordnung (100) Teil einer Seillängen-Einstellanordnung (200) ist.

8. Tragbares Handwerkzeug (1) nach Anspruch 7, wobei die Seilbefestigungsanordnung (100) und eine Sperrvorrichtung (15) der Seillängen-Einstellanordnung (200) einteilig ausgebildet sind.

9. Tragbares Handwerkzeug (1) nach einem der vorhergehenden Ansprüche, wobei das tragbare Handwerkzeug (1) ein Rucksack-Freischneidwerkzeug ist.

10. Tragbares Handwerkzeug (1) nach einem der vorhergehenden Ansprüche, wobei das tragbare Handwerkzeug (1) ein Rucksack-Kettensäge ist.

11. Tragbares Handwerkzeug (1) nach einem der vorhergehenden Ansprüche, wobei das Seil elastisch ist.

12. Tragbares Handwerkzeug (1) nach einem der vorhergehenden Ansprüche, wobei der vorbestimmte Schwellenwert der Kraft (F1), die auf den festgeklemmten Abschnitt (11a) des Seils (11) in einer ersten Richtung wirkt, etwa 30-50 N beträgt.

## Revendications

1. Outil électrique portatif (1) comprenant
un ensemble outil de travail (5) avec un outil de travail (5a) ;
un corps (4) avec une unité d'alimentation (4a), laquelle unité d'alimentation (4a) est agencée pour entraîner l'outil de travail (5a) ;
une tige de guidage allongée (2a) agencée entre l'ensemble outil de travail (5) et le corps (4) ;
un système limiteur de charge (3) comprenant un harnais (3d) agencé pour être porté par un opérateur de l'outil électrique (1), un cadre de support (3a, 3b) agencé de manière à être relié au harnais (3d), et un cordon (11) ; où le corps (4) est agencé de manière à être relié au harnais (3d) ; où le cordon (11) est agencé pour relier la tige de guidage (2a) et le cadre de support (3a, 3b) entre eux, le cordon étant agencé de manière à être relié au cadre de support (3a, 3b) au moyen d'un ensemble de raccordement de cordon (100), **caractérisé en ce que** le cordon (11) a une partie de cordon serrée (11a) et une partie d'extrémité libre (11b) ; et l'ensemble de raccordement de cordon (100) a une partie de serrage de cordon (13) agencée pour serrer la partie (11a) du cordon afin de fixer le cordon (11) au cadre de support (3a, 3b) pendant l'utilisation normale de l'outil électrique (1), et une partie de passage de cordon (14) à travers laquelle le cordon (11) peut passer afin de libérer le cordon (11) du cadre de support (3a, 3b), et **en ce que**
l'ensemble de raccordement de cordon (100) est configuré de manière à activer le mouvement automatique de la partie serrée (11a) du cordon (11) de la partie de serrage de cordon (13) à la partie de passage de cordon (14) lorsqu'une force (F1) agissant sur la partie serrée (11a) du cordon (11) dans une première direction (Y) dépasse une valeur seuil prédéterminée.

2. Outil électrique portatif (1) selon la revendication 1, dans lequel l'ensemble de raccordement de cordon (100) a une partie de passage de cordon auxiliaire (20), vers laquelle un opérateur de l'outil électrique (1) peut déplacer la partie serrée (11a) du cordon (11), en tirant l'extrémité libre (11b) du cordon (11) afin de libérer manuellement le cordon (11) de l'ensemble de raccordement de cordon (100).

3. Outil électrique portatif (1) selon l'une des revendications précédentes, dans lequel la partie de serrage de cordon (13) comprend des nervures.

4. Outil électrique portatif (1) selon la revendication 3, dans lequel les nervures s'étendent selon un angle (a) allant de 25 à 80 degrés par rapport à la première direction (Y), et dans lequel la partie de passage de cordon (14) est positionnée de manière adjacente aux nervures.

5. Outil électrique portatif (1) selon l'une des revendications 3 et 4, dans lequel les nervures s'étendent selon un angle (a) d'environ 60 degrés par rapport à la première direction (Y).

6. Outil électrique portatif (1) selon l'une des revendications précédentes, dans lequel l'ensemble de raccordement de cordon (100) est prévu dans un élément avant (12) d'une barre supérieure (3a) du cadre de support (3a, 3b).

7. Outil électrique portatif (1) selon l'une des revendications précédentes, dans lequel l'ensemble de raccordement de cordon (100) fait partie d'un agencement de réglage de longueur de cordon (200).

8. Outil électrique portatif (1) selon la revendication 7, dans lequel l'ensemble de raccordement de cordon (100) et un dispositif de verrouillage (15) de l'agencement de réglage de longueur de cordon (200) sont formés d'un seul tenant.

9. Outil électrique portatif (1) selon l'une des revendications précédentes, lequel outil électrique portatif (1) est un outil de débroussaillage dorsal.

10. Outil électrique portatif (1) selon l'une des revendications précédentes, dans lequel l'outil (1) est une scie à chaîne dorsale.

11. Outil électrique portatif (1) selon l'une des revendications précédentes, dans lequel le cordon est élastique.

12. Outil électrique portatif (1) selon l'une des revendications précédentes, dans lequel la valeur seuil prédéterminée de la force (F1) agissant sur la partie serrée (11a) du cordon (11) dans une première direction est d'environ 30 à 50 N.
